(19) Europäisches Patentamt

European Patent Office

Office européen des brevets

(11) **EP 1 240 703 B1**

(12) **EUROPÄISCHE PATENTSCHRIFT**

(45) Veröffentlichungstag und Bekanntmachung des Hinweises auf die Patenterteilung:
**11.06.2003 Patentblatt 2003/24**

(21) Anmeldenummer: **00989835.4**

(22) Anmeldetag: **07.12.2000**

(51) Int Cl.[7]: **H02K 11/00**, H02K 15/16

(86) Internationale Anmeldenummer:
**PCT/DE00/04361**

(87) Internationale Veröffentlichungsnummer:
**WO 01/047092 (28.06.2001 Gazette 2001/26)**

(54) **VERFAHREN ZUR ÜBERWACHUNG DES RADIALEN SPALTS ZWISCHEN ROTOR UND STATOR ELEKTRISCHER GENERATOREN UND VORRICHTUNG ZU DESSEN DURCHFÜHRUNG**

METHOD FOR MONITORING THE RADIAL GAP BETWEEN THE ROTOR AND THE STATOR OF ELECTRIC GENERATORS AND DEVICE FOR CARRYING OUT SAID METHOD

PROCEDE POUR LA SURVEILLANCE DE LA FENTE RADIALE ENTRE LE ROTOR ET LE STATOR DE GENERATEURS ELECTRIQUES ET DISPOSITIF POUR L'EXECUTION DE CE PROCEDE

(84) Benannte Vertragsstaaten:
**AT CH DE LI**

(30) Priorität: **20.12.1999 DE 19961528**

(43) Veröffentlichungstag der Anmeldung:
**18.09.2002 Patentblatt 2002/38**

(73) Patentinhaber: **SIEMENS AKTIENGESELLSCHAFT 80333 München (DE)**

(72) Erfinder:
- **SCHEIL, Hermann**
  **91334 Hemhofen (DE)**
- **BRIENDL, Dieter**
  **CH-5400 Baden (CH)**

(56) Entgegenhaltungen:
**US-A- 6 014 598**

- **VIBROSYSTM: "ZOOM: on-line monitoring of hydro generating units for optimized operations and maintenance" VIBROSYSTM, XP002166126 Gefunden im Internet: <URL:www.vibrosystm.com/frhydroe.html> [gefunden am 2001-04-26]**
- **VIBROSYSTM: "AGMS: generator diagnostics through on-line air gap monitoring" VYBROSYSTM, XP002166127 Gefunden im Internet: <URL:www.vibrosystm.com/frhdroe.html> [gefunden am 2001-04-26]**

## Beschreibung

Die Erfindung betrifft ein Verfahren zur Überwachung des radialen Spalts zwischen dem Rotor und dem Stator eines elektrischen Generators. Sie betrifft weiter eine Vorrichtung zur Durchführung des Verfahrens.

Der radiale Spalt zwischen dem Rotor und dem Stator eines Generators hat die Form eines konzentrischen, ringförmigen Kreiszylinders. Dabei wird der äußere Mantel durch das Blechpaket des Stators und der innere Mantel durch die Oberfläche der Pole auf dem Rotor gebildet, wobei der größte Rotordurchmesser bestimmend ist.

Die Größe des radialen Spalts, die maßgebend für das Magnetfeld bzw. den Erregungsbedarf ist, ist üblicherweise bezogen auf den Durchmesser der Statorinnenwand sehr klein und beträgt bei Generatoren, die beispielsweise einen Rotordurchmesser von 16 m aufweisen, etwa 0,2% des Durchmessers der Statorinnenwand. Über den radialen Spalt findet eine magnetische Wechselwirkung zwischen dem Rotor und dem Stator statt. Die magnetischen Kräfte verstärken dabei vorhandene statische und/oder rotierende Asymmetrien, da ein lokal besonders kleiner radialer Spalt ein lokal vergleichsweise größeres Magnetfeld bedingt. Dieser Umstand bewirkt größere Kräfte, die in Abhängigkeit von der mechanischen Steifigkeit des Generators eine weitere asymmetrische Verformung verursachen können. Daher sollte durch geeignete Auslegung, Konstruktion und Herstellung des Generators eine möglichst ideale Form des radialen Spalts zwischen dem Rotor und dem Stator angestrebt werden.

Die Form des radialen Spalts zwischen dem Rotor und dem Stator ist im Stillstand des Rotors bedingt durch Toleranzen, die bei Fertigung und Montage entstehen. Dabei ist zu beachten, daß die Form der Statorinnenwand üblicherweise nicht die Form eines idealen Kreises aufweist, sondern hiervon zumindest geringfügig und über die Achse nicht gleichmäßig verteilt abweicht. Häufig sind hierbei zentrisch symmetrische Verformungen anzutreffen, wie beispielsweise Ovalität, Sechsund Acht-Knoten Verformungen (Kleeblatt). Andere Symmetrien, hervorgerufen beispielsweise durch Abstützelemente, wie Sternarme und anderes, sind ebenfalls anzutreffen. Axial gesehen, kann auch der mittlere Luftspalt variieren, beispielsweise durch eine lokale Verengung der Statormitte. Verformungen dieser Art können bei Schrumpfprozessen und Setzvorgängen von senkrecht angeordneten Statoren entstehen. Asymmetrische Verformungen sind vorwiegend durch Verkrümmung bedingt, das bedeutet, daß die geometrischen Zentren axial betrachtet nicht auf einer Geraden liegen. Weiterhin ist üblicherweise auch die Form des Rotors nicht ideal, beispielsweise können am Rotor von sogenannten Vielpolmaschinen einzelne Pole, auch Paketweise, vor- oder zurückstehen.

Durch den Betrieb des Generators und Umgebungseinflüsse kann sich zusätzlich die Form des radialen Spalts verändern. Eine erhebliche Abweichung des radialen Spalts von der Idealform entsteht, wenn die Rotorachse und die Statorachse nicht parallel sind. Hierbei ist sowohl eine parallele Verschiebung als auch eine Schrägstellung der Rotorachse relativ zur Statorachse zu beachten. Eine derartige Abweichung kann entstehen, wenn sich nach längerer Betriebszeit des Generators die Aufstellung des Rotors relativ zum Stator verändert, Spiele bei den Abstützelementen vorhanden sind, Fundamenteinflüsse sich bemerkbar machen, Schrumpfungsvorgänge im Beton stattfinden, Boden- und/oder Felsverschiebungen erfolgen. Auch die Lagerspiele des Rotorlagers beeinflussen die Ausrichtung der Rotorachse relativ zur Statorachse.

Beim Betrieb des Generators kann außerdem die Drehzahl des Rotors eine Vergrößerung des Rotordurchmessers durch Zentrifugalkräfte bewirken. Dabei ist vor allem bei den ersten Anläufen des Generators, also bei der Inbetriebsetzung und bei der Überdrehzahlprüfung, eine nicht-elastische Verformung des Rotors und eine damit verbundene dauerhafte Veränderung des radialen Spalts zwischen dem Rotor und dem Stator des Generators zu beachten. Auch die üblicherweise konstanten magnetischen Kräfte beim Betrieb des Generators bewirken eine Verkleinerung des radialen Spalts im Vergleich zur Form des radialen Spalts beim Stillstand des Rotors.

Die Rotortemperatur ist vom Erregerstrom, den mechanischen Verlusten durch Reibung und der Kühlung des Rotors abhängig. Hinzu kommt, daß die Rotortemperatur von der Statortemperatur abhängt, da Rotor und Stator über einen Kühlkreis üblicherweise gekoppelt sind. Bei transienten Betriebszuständen, beispielsweise Lastveränderungen, treten daher thermische Zeitkonstanten von beispielsweise 3 bis 10 Stunden auf. In Bezug auf die Rotortemperatur und Statortemperatur ist daher zu beachten, daß durch diese Temperaturen asymmetrische Verformungen des Rotors verursacht werden können. Dies kann beispielsweise durch eine stark asymmetrische Kühlung verursacht werden.

Besonders bei großen Generatoren, beispielsweise Wasserkraft-Generatoren mit Rotordurchmessern von mehr als 5 m, besteht die Gefahr, daß sich der Rotor nicht konzentrisch in der Mitte des Stators bewegt. Dabei können sich sowohl die Form des Rotors und des Stators sowie deren relative Lage zueinander verändern. Die Folge sind große, auf den Umfang des Rotors ungleichmäßig verteilte Kräfte und teilweise Schwingungen. Im Extremfall kann dies zu einem Anstreifen des Rotors an den Stator beim Betrieb des Generators führen, womit schwere Schäden und lange Ausfallzeiten des Generators verbunden sind.

Konventionelle Überwachungsmethoden des radialen Spalts zwischen dem Rotor und dem Stator eines Generators geben keine Auskunft über die aktuelle Form des radialen Spalts während des Betriebs des Generators. Üblicherweise werden Schwingungsüberwachungen des Blechpakets des Stators eingesetzt, die jedoch Veränderungen der Form des radialen Spalts zwischen dem Rotor und dem Stator nur teilweise erfassen können.

Der Erfindung liegt daher die Aufgabe zugrunde, ein Verfahren zur Überwachung des radialen Spalts zwischen dem Rotor und dem Stator eines elektrischen Generators anzugeben, bei dem während des Betrieb des Generators eine Analyse der Form des radialen Spalts und eine Überwachung des Abstands zwischen dem Stator und dem Rotor zuverlässig gewährleistet ist. Dies soll bei einer zur Durchführung des Verfahrens geeigneten Vorrichtung mit besonders geringem technischem Aufwand erreicht werden.

Im Bezug auf das Verfahren der eingangs genannnten Art wird die Aufgabe erfindungsgemäß in folgenden Schritten gelöst:

1. Bei verschiedenen definierten Betriebszuständen werden vorab jeweils den Betriebszustand bedingende Einflußgrößen erfaßt, Basismessungen vorgenommen und daraus Basis-Referenzkenngrößen für die im jeweiligen Betriebszustand gemessene intakte Luftspaltgeometrie gebildet.

2. Während des späteren Betriebs wird die Größe des radialen Spalts an mehreren, über den Umfang der Maschine verteilten Meßstellen und mindestens eine aktuelle Einflußgröße des aktuellen Betriebszustands erfaßt.

3. Aus den im Schritt 2 erhaltenen Größen werden aktuelle Kenngrößen, und aus den im Schritt 1 erhaltenen Basis-Referenzkenngrößen werden aktuelle Referenzkenngrößen gebildet, die einem intakten Luftspalt bei den aktuellen Werten der Einflußgrößen entsprechen.

4. Mindestens die in Schritt 3 gewonnenen aktuellen Kenngrößen werden mit den entsprechenden aktuellen Referenz-Kenngrößen des radialen Spalts verglichen; und wenn mindestens eine der aktuellen Kenngrößen von der Referenz-Kenngröße um mehr als einen festgelegten Betrag abweicht, wird eine Warnung gegeben.

Vorteilhaft werden die aktuellen Meßdaten bei einem stationären und ausgeglichenem Betriebszustand der elektrischen Maschine aufgenommen. Dies bedeutet, daß sich die Betriebsparameter der elektrischen Maschine in einem Zustand der Beharrung befinden sollen und daß alle Ausgleichsvorgänge, die von einem Wechsel des Betriebszustandes ausgelöst werden, abgeschlossen sein sollen. Eine Erfassung der aktuellen Meßdaten bei einem nicht stationären und/oder nicht ausgeglichenem Betriebszustand würde lediglich eine Momentaufnahme der Form des radialen Spalts liefern. Ein sicherer Rückschluß auf eine Störung der Luftspaltgeometrie wäre dabei nicht möglich.

In weiterer Ausgestaltung der Erfindung werden die aktuellen Meßdaten und Einflußgrößen zyklisch erfaßt und sowohl die aktuellen Kenngrößen als auch die entsprechenden aktuellen Referenz-Kenngrößen in jedem Meßzyklus gebildet. Auf diese Weise wird eine quasi-kontinuierliche Überwachung des radialen Spalts realisiert. So ist es möglich, zu nahezu jedem Zeitpunkt des Betriebs der elektrischen Maschine eine gefährdende Störung der Luftspaltgeometrie zu erkennen und ggf. Gegenmaßnahmen einzuleiten.

Vorteilhaft wird als Einflußgröße mindestens eine der folgenden Betriebsparameter der elektrischen Maschine erfaßt:

- die in den Wicklungen des Stators fließenden Ströme ($I_u$, $I_v$, $I_w$),
- der in der Wicklung des Rotors fließende Strom ($I_E$),
- die Temperatur ($T_{LK}$) der dem Stator zuströmenden kalten Kühlluft (L).

Die genannten Einflußgrößen sind die wesentlichen Größen, die zum einen den Betriebszustand der Maschine bedingen und zum anderen die Form des radialen Spalts beeinflussen. In Kenntnis der physikalischen Zusammenhänge zwischen den Einflußgrößen und der Form des radialen Spalts können so die aktuellen Referenz-Kenngrößen gebildet werden.

In einer weiteren vorteilhaften Ausgestaltung der Erfindung wird eine mathematische Methode der Fourier-Analyse auf erste mathematische Vektoren angewendet, die jeweils für eine Meßstelle die aktuellen Meßwerte des Luftspalts zwischen Stator und den während eines Umlaufs vorbeilaufenden Rotorpolen enthalten.
Die Bildung eines derartigen ersten Vektors wird im folgenden beispielhaft dargestellt.
Die Anzahl der Meßstellen sei n und ein den Meßstellen zugeordneter Index i habe den Wertebereich i=1...n.
Die Anzahl der Rotorpole sei r und ein den Rotorpolen zugeordneter Index j habe den Wertebereich j=1...r.
Bei einem Umlauf des Rotors entstehen an jeder Meßstelle i folglich r aktuelle Meßwerte $m_{ij}$ wobei der aktuelle feste Wert des Indexes i die betrachtete Meßstelle beschreibt. Der daraus zu bildende Vektor heiße $V_i$:

$$v_i = [m_{i1}\ m_{i2}\ \cdots\ m_{ir}]$$

Auf derartige erste Vektoren wird dann wie oben genannt eine Methode der Fourier-Analyse angewandt. Mindestens einer der Aufgrund der Fourier-Analyse errechneten Koeffizienten wird zur Bildung von mindestens einer aktuellen Kenngröße herangezogen. Entsprechende Basis-Referenzkenngrößen des radialen Spalts werden unter entsprechender Anwendung der Fourier-Analyse auf die Basismeßwerte gewonnen. Die mathematischen Methoden der Fourier-Analyse sind bekannt; es handelt sich dabei um eine harmonische Analyse, die den in den Eingangsdaten gegebenenfalls vorhandenen Gleichanteil sowie die enthaltenen harmonischen Schwingungsanteile ermittelt. Die durch die Fourier-Analyse berechneten Koeffizienten können als charakteristische geometrische Größen interpretiert werden.

Vorteilhaft werden der erste, dem Gleichanteil der Fourier-Analyse entsprechende Koeffizient, der zweite, der Grundschwingung entsprechende Koeffizient und der dritte, der ersten Oberschwingung entsprechende Koeffizient zur Bildung von weiteren aktuellen Kenngrößen verwendet. Der Mittelwert der jeweils zu einem Vektor errechneten ersten Koeffizienten beschreibt dabei die mittlere Größe des radialen Spalts, der Mittelwert der jeweils zweiten Koeffizienten die mittlere Verschiebung der Rotorachse relativ zur Achse des Stators ("Exzentrität des Rotors") und der Mittelwert der jeweils dritten Koeffizienten die mittlere Verformung des Rotors ("Ovalität des Rotors"). Die unter Verwendung der Fourier-Koeffizienten gebildeten Kenngrößen des radialen Spalts kennzeichnen also bereits die Form desselben.

In weiterer vorteilhafter Ausgestaltung der Erfindung wird aus den bereits bestimmten Kenngrößen eine Hilfs-Kenngröße abgeleitet, welche eine Abschätzung darüber erlaubt, ob die weiteren aktuellen Kenngrößen die Verformung des Rotors ausreichend genau beschreiben. Aus mathematischer Sicht handelt es sich dabei um eine Abschätzung der sogenannten Restglieder der Fourier-Analyse, die nicht zur Bildung von Kenngrößen herangezogen werden.

Vorteilhaft wird bei signifikanten Werten der Hilfs-Kenngröße aus mindestens einem weiterem mittels der Fourier-Analyse gewonnenen Koeffizienten mindestens eine Bedarfskenngröße gebildet. Diese Bedarfs-Kenngröße liefert in diesem Zusammenhang eine Information über eine Verformung des Rotors, die nicht von den bereits gebildeten Kenngrößen des Radialen Spalts erfaßt wird.

Vorteilhaft wird eine mathematische Methode der Fourier-Analyse auf einen zweiten mathematischen Vektor mit jeweils einer Meßstelle entsprechenden Vektorkomponenten angewendet, die jeweils den zu einer Meßstelle gehörigen Mittelwert der Größe des radialen Spalts enthält. Aus mindestens dem zweiten aufgrund der Fourier-Analyse errechneten Koeffizienten wird mindestens eine zusätzliche aktuelle Kenngröße gebildet; entsprechende aktuelle Referenz-Kenngrößen des radialen Spalts werden unter entsprechender Anwendung der Fourier-Analyse auf die gemittelten, zu jeweils einer Meßstelle gehörigen, Basis-Referenzgrößen gewonnen.

Die Bildung eines derartigen zweiten Vektors wird im folgenden beispielhaft dargestellt wobei die Bedeutungen der Größen i, r, j, n und $m_{ij}$ bereits in einer anderen vorteilhaften Ausführung der Erfindung beschrieben wurden. Der zu einer Meßstelle i gehörige Mittelwert der Größe des radialen Spalts heiße $d_i$ und werde folgendermaßen gebildet:

$$d_i = \frac{1}{r} \sum_{j=1}^{r} m_{ij}$$

Die Bildung eines zweiten mathematischen Vektors - welcher mit w bezeichnet werde - geschieht dann wie folgt:

$$w = [d_1 \ d_2 \cdots d_n]$$

Auf einen derartigen zweiten Vektor wird dann wie oben erwähnt eine Methode der Fourier-Analyse angewandt.

In weiterer vorteilhafter Ausgestaltung der Erfindung werden die zusätzlichen aktuellen Kenngrößen aus den aufgrund der Fourier-Analyse des zweiten Vektors berechneten zweiten und dritten Koeffizienten gebildet. Der zweite Koeffizient beschreibt dabei die Verschiebung der Statorachse relativ zur Achse des Rotors ("Exzentrität des Stators") und der dritte Koeffizient die Verformung des Stators ("Ovalität des Stators").

Vorteilhaft werden die aktuellen Meßdaten des radialen Spalts in einer Meßebene aufgenommen, deren Flächennormale parallel zur Welle des Rotors orientiert ist. Ist die Statorhöhe der elektrischen Maschine groß im Vergleich zum Durchmesser des Stators, so werden die aktuellen Meßdaten ggf. in mehreren Meßebenen erfaßt.

In weiterer vorteilhafter Ausgestaltung der Erfindungen wird neben den den aktuellen Betriebszustand der elektrischen Maschine beschreibenden Einflußgrößen auch mindestens eine Randgröße erfaßt. Randgrößen sind in diesem Zusammenhang Größen, die nicht Einflußgrößen sind, also die Form des radialen Spalts nicht unmittelbar wesentlich beeinflussen.

Vorteilhaft wird als Randgröße mindestens eine der folgenden Größen erfaßt:

- die Temperatur ($T_{16}$) des Stator-Blechpakets,
- die Temperatur ($T_{18}$) der Statorwicklung,
- die Temperatur ($T_{LW}$) der vom Stator abströmenden, warmen Kühlluft
- die Temperatur ($T_{WK}$) des kalten Kühlwassers vor dem Eintritt in die Statorwicklung,
- die Temperatur ($T_{WW}$) des warmen, aus der Wicklung des Stators austretenden Kühlwassers,
- die Temperatur der Rotorwicklung,
- die Bildleistung der elektrischen Maschine,
- die Wirkleistung der elektrischen Maschine.

Von diesen Randgrößen kann in vorteilhafter Weise zur weitergehenden Analyse der aktuellen Kenngrößen des radialen Spalts Gebrauch gemacht werden.

Vorteilhaft wird mindestens jede Messung von aktuellen Maßdaten, Einflußgrößen und Randgrößen sowie alle zu einer Messung ermittelten Kenngrößen dokumentiert. So ist z.B. unter Verwendung aller Daten eines längeren Zeitraums eine Trendanalyse der verschiedenen Größen möglich. Desweiteren können verschiedene statistische Betrachtungen des Datenmaterials stattfinden.

Nach einer besonderen Variante der erfindung wird die genannte Aufgabe gelöst, indem bei einem stationären und ausgeglichenen Betriebszustand des Generators wiederholt ein Meßzyklus durchgeführt wird, wobei bei dem Meßzyklus

- aktuelle Einflußgrößen des Generators erfaßt werden,
- aktuelle Meßdaten des radialen Spalts und aktuelle Randgrößen des Generators erfaßt werden,
- aus den aktuellen Randgrößen des Generators, aus den aktuellen Einflußgrößen des Generators und aus den aktuellen Meßdaten des radialen Spalts aktuelle Kenngrößen des radialen Spalts ermittelt werden, und
- mittels eines Vergleichs der aktuellen Kenngrößen des radialen Spalts mit Referenzwerten aus einer Anzahl von Basismessungen eine Bestimmung und Bewertung der Form des radialen Spalts und des Abstands zwischen dem Rotor und dem Stator erfolgt.

Die Erfindung geht dabei von der Überlegung aus, daß die Form des radialen Spalts zwischen dem Rotor und dem Stator während des Betriebs des Generators erfasst und analysiert werden sollte, um den Abstand zwischen dem Rotor und dem Stator zuverlässig zu überwachen. Der Betriebszustand des Generators wirkt sich auf die aktuelle Geometrie des radialen Spalts aus; beispielsweise führen dynamische Laständerungen oder statische, meist eher kurzzeitig auftretende, asymmetrische Belastungen auf der elektrischen Seite des Generators zu mechanischen Kräfteverhältnissen, die im allgemeinen unsymmetrisch auf den Stator und den Rotor einwirken und so die konstruktiv für einen ausgeglichenen, normalen Betriebszustand festgelegte Geometrie des Spalts verändern. Diese Veränderung der Spaltgeometrie unter den beispielhaft zuvor genannten Betriebsbedingungen stellt jedoch keine unzulässige oder gefährdende Abweichung von den konstruktiv gewünschten, für einen ausgeglichenen, normalen Betriebszustand aufgenommenen Kenngrößen einer Referenzmessung der Spaltgeometrie dar. Die Konstruktion des Generators sieht auch derartige Betriebsbedingungen vor, und die sich daraus ergebenden Änderungen der Spaltgeometrie stellen keine Störung dar, die beachtet und/oder behoben werden muss. Um sicher von bei einem aktuellen Betriebszustand gemessenen Kenngrößen durch Vergleich mit Referenzkenngrößen auf eine unzulässige oder gefährdende Abweichung schließen zu können, ist deshalb der aktuelle Betriebszustand mitzuerfassen und in die Analyse der Abweichung mit einzubeziehen.

Weiterhin sollten Veränderungen des Generators, die sich negativ auf die Form des radialen Spalts auswirken können, frühzeitig erkennbar sein, damit sie behoben werden können. Veränderungen des Generators sind mittels der Einflußgrößen und der Randgrößen erfaßbar. Daher sollte der Einfluß der Randgrößen und Einflußgrößen des Generators auf die Form des radialen Spalts erfaßt und bewertet werden, um hieraus frühzeitige Informationen über eine Veränderung der Form des radialen Spalts zu erhalten die es ermöglichen, die Ursachen zu finden. Hierzu werden aus aktuellen Randgrößen und Einflußgrößen des Generators sowie aus aktuellen Meßdaten des radialen Spalts aktuelle Kenngrößen des radialen Spalts ermittelt.

Die Überwachung des radialen Spalts sollte quasi-kontinuierlich erfolgen, damit zu jedem Zeitpunkt des Betriebs des Generators eine Aussage über die Form des radialen Spalts und den Abstand zwischen dem Rotor und dem Stator möglich ist. Hierfür erweist sich ein Meßzyklus als geeignet, mit dessen Hilfe in regelmäßigen Zeitabständen alle variablen Einflußgrößen zyklisch abgefragt und dahingehend überprüft werden, ob sich der Generator in einem Zustand der thermischen Beharrung, also in einem stationären und ausgeglichenen Zustand befindet. Liegt ein Zustand der thermischen Beharrung des Generators vor, so sollte eine Analyse der Form des radialen Spalts sowie eine Überwachung des Abstands zwischen dem Rotor und dem Stator erfolgen. Hierzu werden nach einer Überprüfung der Einflußgrößen aktuelle Meßdaten des radialen Spalts eingelesen und mittels eines Vergleichs der aktuellen Kenngrößen des radialen Spalts mit Referenzwerten aus einer Anzahl von Basismessungen bewertet.

Mit Hilfe der aktuellen Kenngrößen des radialen Spalts sollte eine Analyse der Form des radialen Spalts erfolgen, die frühzeitig eine insbesondere den Betrieb des Generators gefährdende Verformung des radialen Spalts zwischen dem Stator und dem Rotor erkennen läßt. Dabei sollte besonders zuverlässig eine Abweichung der Form des radialen Spalts von der Idealform erkannt werden. Hierzu wird mittels eines Vergleichs der aktuellen Kenngrößen des radialen Spalts mit Referenzwerten des Generators vorteilhafterweise die Verschiebung des Stators relativ zur Achse des Rotors und die Verformung des Stators und des Rotors bestimmt und bewertet.

Vorteilhafterweise sind die Randgrößen Temperaturwerte an verschiedenen Orten des Stators, der Temperaturwert an der Wicklung des Rotors, die Wirkleistung des Generators und die Blindleistung des Generators. Dabei sind die Temperaturwerte des Stators vorteilhafterweise der Temperaturwert am Blechpaket, der Temperaturwert an der Wicklung des Stators, der Temperaturwert der vom Stator abströmenden und im Stator erwärmten Kühlluft, der Temperaturwert des kalten Kühlwassers vor dessen Eintritt in die Wicklung des Stators und der Temperaturwert des im Stator erwärmten Kühlwassers nach dessen Austritt aus der Wicklung des Stators. Diese Randgrößen sind besonders einfach beim Betrieb des Generators zu messen und charakterisieren besonders zuverlässig den Betriebszustand des Rotors und des Stators.

Vorteilhafterweise sind die Einflußgrößen der Strom und die Spannung des Stators, der Erregerstrom und die Drehzahl des Rotors und der Temperaturwert der dem Stator zuströmenden kalten Kühlluft. Die Spannung des Stators und die Drehzahl des Rotors sind üblicherweise im stationären Betriebszustand des Generators konstant. Beim Strom des Stators kann es sich hierbei um drei separate Teilströme handeln, wenn der Stator mit Drehstrom betrieben wird. In diesem Fall umfaßt dann auch die Wicklung des Stators drei Teilwicklungen, die separat mit den Teilströmen bespeist werden. Der Strom des Stators, der Erregerstrom des Rotors und die Temperatur der dem Stator zuströmenden kalten Kühlluft beeinflussen nachhaltig die Form des Rotors und dessen Lage relativ zum Stator und sind deshalb als Einflußgrößen besonders geeignet.

Die aktuellen Meßdaten des radialen Spalts werden vorteilhafterweise in einer Meßebene bestimmt, die senkrecht zur Rotationsachse des Rotors steht. Hierdurch fällt die Anzahl der für eine besonders zuverlässige Erfassung der Form des radialen Spalts zwischen dem Stator und dem Rotor erforderlichen Sensoren besonders gering aus. Die Anzahl der Sensoren ist so bestimmt, daß sie ausreicht, um alle für den Generator gefährlichen Statorverformungen sicher zu erfassen. **Beispielsweise** kann eine Ovalität des Stators sicher mit sechs Meßorten erfaßt werden. Ausreichend sind hierbei jedoch häufig vier Meßorte, da die Wahrscheinlichkeit, daß alle Meßorte in einem Verformungsknoten liegen, sehr gering ist. Üblicherweise verwendet man bei einem Durchmesser des Blechpakets von weniger als 8 m vier Meßorte und bei einem Bohrungsdurchmesser von mehr als 8 m acht Aufnehmer. Bei einer besonders geringen Statorhöhe in Relation zum Durchmesser des Stators erweist sich eine Meßebene als ausreichend. Diese wird üblicherweise bei vertikaler Generatorachse am oberen Statorende angebracht, da dort die größten Verformungen des radialen Spalt zu erwarten sind. Es kann sich aber auch als sinnvoll erweisen, die Meßebene in der Mitte des Stators zu plazieren, da dort aufgrund von Setzvorgängen, bedingt durch Magnetkräfte beim Betrieb des Generators, dort ein sich beim Betrieb des Generators verkleinernder radialer Spalt zu erwarten ist. Bei Generatoren mit einer im Vergleich dazu besonders großen Höhe des Stators können darüber hinaus Veränderungen in axialer Richtung, **beispielsweise** eine Schrägstellung der Rotorachse relativ zur Statorachse, durch eine weitere Meßebene erfaßt werden.

Vorteilhafterweise wird jeder Meßzyklus dokumentiert. Hierdurch sind Trendanalysen insbesondere von Meßdaten des radialen Spalts, Einflußgrößen und Randgrößen möglich, wodurch Veränderungen des Generators im Laufe der Zeit erkannt werden können. Mittels dieser Dokumentationen können Ursachen für Veränderungen des Generators frühzeitig erkannt und behoben werden.

Bezüglich der Vorrichtung zur Überwachung des radialen Spalts zwischen dem Rotor und dem Stator eines elektrischen Generators wird die genannte Aufgabe erfindungsgemäß gelöst, indem die Anordnung einer Anzahl von Sensoren zur Erfassung von aktuellen Randgrößen des Generators, aktuellen Einflußgrößen des Generators und aktuellen Meßdaten des radialen Spalts am Generator vorgesehen ist, wobei die Sensoren datentechnisch mit einem zur Erstellung von aktuellen Kenngrößen aus den aktuellen Randgrößen des Generators, den aktuellen Einflußgrößen des Generators und den aktuellen Meßdaten des radialen Spalts vorgesehenen Aufbereitungsmodul verbunden sind, wobei das Aufbereitungsmodul datentechnisch an ein Analysemodul angeschlossen ist, wobei über das Analysemodul ein Meßzyklus zur Analyse der Form des radialen Spalts und zur Überwachung des Abstands zwischen dem Rotor und dem Stator steuerbar ist.

Diese Vorrichtung ermöglicht, mit einer besonders geringen Anzahl an Komponenten die Form des radialen Spalts zu analysieren und den Abstands zwischen dem Rotor und dem Stator zu überwachen.

Vorteilhafterweise ist zur Dokumentation der aktuell erfaßten Daten des Generators ein datentechnisch mit dem Analysemodul verbundenes Speichermodul vorgesehen. Die gespeicherten Werte ermöglichen Tendenzberechnungen und liefern Informationen für Diagnosen. Dabei können Protokollausdrucke von den aktuellen Werten automatisch erzeugt werden. Auch kann eine Darstellung mittels frei konfigurierbarer Graphiken aller gespeicherten Referenzwerte sowie der erfaßten Daten vorgesehen sein.

Die mit der Erfindung erzielten Vorteile bestehen insbesondere darin, daß durch die aktuelle Erfassung der Einflußgrößen, Randgrößen und Meßdaten im Rahmen eines immer wiederkehrenden Meßzyklus die Analyse der Form des radialen Spalts zwischen dem Rotor und dem Stator des Generators und die Überwachung des Abstands zwischen dem Rotor und dem Stator besonders zuverlässig gewährleistet ist. Hiermit sind Veränderungen der Form des radialen Spalts zwischen dem Rotor und dem Stator des Generators frühzeitig erkennbar, wodurch den Betrieb des Generators schädigende Einflüsse frühzeitig erkannt und behoben werden können.

Ein Ausführungsbeispiel der Erfindung wird anhand einer Zeichnung näher erläutert, wobei einander entsprechende Teile in allen Figuren mit den gleichen Bezugszeichen versehen sind. Darin zeigen:

FIG 1    schematisch eine Vorrichtung zur Durchführung des Verfahrens zur Überwachung des radialen Spalts zwischen dem Rotor und dem Stator eines elektrischen Generators, und

FIG 2    schematisch einen Querschnitt durch den Rotor und den Stator gemäß Figur 1.

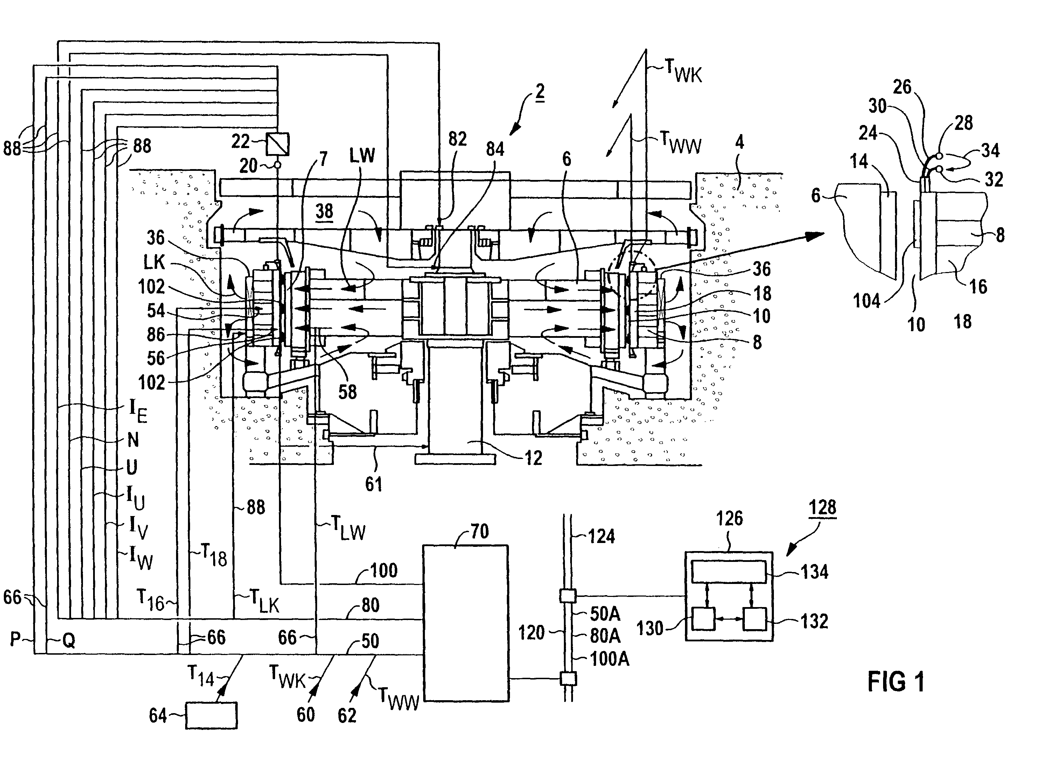

Der im Längsschnitt in Figur 1 schematisch dargestellte Generator 2 ist als Wasserkraftgenerator ausgebildet und umfaßt in einem Gehäuse 4 einen Rotor 6, der konzentrisch von einem Stator 8 umgeben ist. Der Rotor 6 und der Stator 8 sind durch einen radialen Spalt 10 voneinander getrennt. Der Rotor 6 umfaßt eine Welle 12, eine für den Erregerstrom $I_E$ des Rotors 6 vorgesehene Wicklung 14 und zahlreiche, in der Zeichnung nicht näher dargestellte Pole. Der Stator 8 weist ein Blechpaket 16 und eine Wicklung 18 auf. Die Wicklung 18 des Stators 8 ist über Anschlußklemmen 20 an Trennverstärker 22 angeschlossen, die an Meßkreise angeschlossen sind, wobei die Meßkreise in der Zeichnung nicht dargestellt sind.

Die Wicklung 18 des Stators 8 umfaßt drei separate Wicklungen U, V und W, die in der Zeichnung nicht dargestellt sind. Jede der drei separaten Wicklungen U, V und W umfaßt wiederum elektrisch hintereinander geschaltete Wicklungsstäbe 24, von denen nur einige in der Zeichnung herausgezeichnet sind. Jeder Wicklungsstab 24 bzw. eine Anzahl von in der Zeichnung nicht dargestellten Teilleitern eines jeden Wicklungsstabs 24 wird beim Betrieb des Generators 2 von Kühlwasser durchströmt. Zur Zuführung von kaltem Kühlwasser WK sind die Wicklungsstäbe 24 der Wicklung 18 eingangsseitig über isolierende Kunststoffschläuche 26 mit einer ersten Ringleitung 28 verbunden. Zur Abführung des beim Betrieb des Generators 2 in den Wicklungsstäben 24 der Wicklung 18 erwärmten Kühlwassers WW ist die Wicklung 18 des Stators 8 ausgangsseitig über Kunststoffschläuche 30 an eine zweite Ringleitung 32 angeschlossen. Die zweite Ringleitung 32 ist zur Abkühlung des in der Wicklung 18 erwärmten Kühlwassers WW in nicht näher dargestellter Weise an ein Kühlsystem angeschlossen, das ausgangsseitig zum Zuführen von kaltem Kühlwasser WK an die erste Ringleitung 28 angeschlossen ist, so daß ein geschlossener Kühlwasserkreislauf 34 entsteht, der in der Zeichnung durch Pfeile angedeutet ist.

Sowohl der Stator 8 als auch der Rotor 6 sind während des Betriebs des Generators 2 mittels Kühlluft L kühlbar. Hierzu ist am Stator 8 ein Kühlluftkühler 36 angeordnet. Die aus dem Kühlluftkühler 36 beim Betrieb des Generators 2 austretende kalte Kühlluft L wird dem Rotor 6 zugeführt, was in der Zeichnung nicht dargestellt ist. Im Rotor 6 wird die Kühlluft L erwärmt und strömt bedingt durch die Drehbewegung des Rotors 6 dem Stator 8 zu, wo sie wieder in den Kühlluftkühler 36 gelangt, so daß ein geschlossener Kühlluftkreislauf 38 entsteht.

Die zu erfassenden Randgrößen 50 des Generators 2 sind der Temperaturwert $T_{16}$ am Blechpaket 16 des Stators 8, der Temperaturwert $T_{18}$ an der Wicklung 18 des Stators 8, der Temperaturwert $T_{LW}$ der vom Stator 8 abströmenden erwärmten Kühlluft L des Stators 8, der Temperaturwert $T_{WK}$ des kalten Kühlwassers WK vor dessen Eintritt in die Wicklung 18 des Stators 8 und der Temperaturwert $T_{WW}$ des warmen Kühlwassers WW nach dessen Austritt aus der Wicklung 18 des Stators 8. Weitere Randgrößen 50 des Generators 2 sind der Temperaturwert $T_{14}$ der Wicklung 14 des Rotors 6, sowie die Wirkleistung P und die Blindleistung Q des Generators 2.

Zur Erfassung der Randgrößen 50 sind an dem Generator 2 eine Anzahl von Sensoren 52 angeordnet. Hierbei ist eine erste Gruppe 54 von Sensoren 52 am Blechpaket 16 des Stators 8 zur Erfassung des Temperaturwerts $T_{16}$ am Blechpaket 16 des Stators 8 angeordnet. Eine zweite Gruppe 56 von Sensoren 52 ist an der Wicklung 18 des Stators 8 zur Erfassung des Temperaturwerts $T_{18}$ der Wicklung 18 des Stators 10 angeordnet. Eine dritte Gruppe 58 von Sensoren 52 ist im Stator 8 zur Erfassung des Temperaturwerts $T_{LW}$ der vom Stator 8 abströmenden warmen Kühlluft L angeordnet. Eine vierte Gruppe 60 von Sensoren 52 ist im Kühlwasserkreislauf 34 eingangsseitig vor der ersten Ringleitung 28 zur Erfassung des Temperaturwertes $T_{WK}$ des kalten Kühlwassers WK vor dessen Eintritt in die Wicklung 18 des Stators 8 vorgesehen. Zur Erfassung des Temperaturwerts $T_{WW}$ des warmen Kühlwassers WW nach dessen Austritt aus der Wicklung 18 des Stators 8 ist ausgangsseitig nach der zweiten Ringleitung 32 im Kühlwasserkreislauf 34 eine fünfte Gruppe 62 von Sensoren 52 vorgesehen. Für die rechnerische Ermittlung des Temperaturwertes $T_{14}$ der Wicklung 14 des Rotors 6 ist ein Modul 64 vorgesehen, das aus dem elektrischen Widerstand der Wicklung 14 des Rotors 6 und aus dem Verlust des die Wicklung 14 des Rotors 6 durchfließenden Stroms den Temperaturwert $T_{14}$ der Wicklung 14 des Rotors 6 ermittelt. Die ebenfalls als Randgrößen 50 vorgesehene Wirkleistung P und Blindleistung Q des Generators 2 werden über den Trennverstärker 22 aus bestehenden und mit den Anschlußklemmen 20 der Wicklung 14 verbundenen und in der Zeichnung nicht dargestellten Meßkreisen ausgeblendet. Die Sensoren 52 der Randgrößen 50 sind über datentechnische Verbindungen 66 dem Aufbereitungsmodul 70 zuführbar.

Einflußgrößen 80 des Generators 2 sind der Strom I und die Spannung U des Stators 8, der Erregerstrom $I_E$ und die Drehzahl N des Rotors 6 und der Temperaturwert $T_{LK}$ der dem Stator 8 zuströmenden kalten Kühlluft L. Der Strom I des Stators 8 umfaßt die drei Teilströme $I_U$, $I_V$, und $I_W$ der Wicklungen U, V und W des Stators 8. Die Teilströme $I_U$, $I_V$, und $I_W$ werden mit den an die Trennverstärker 22 angeschlossenen und in der Zeichnung nicht dargestellten Meßkreisen gemessen. Auch die Spannung U des Stators 8 ist über die Trennverstärker 22 aus bestehenden und in der Zeichnung nicht näher dargestellten Meßkreisen ausblendbar. Der Erregerstrom $I_E$ des Rotors 6 und die Drehzahl N des Rotors 6 sind über eine siebte Gruppe 82 bzw. achte Gruppe 84 von Sensoren 52 erfaßbar, die am Rotor 6 in geeigneter Weise angeordnet sind. Der Temperaturwert $T_{LK}$ der dem Stator 8 zuströmenden kalten Kühlluft L ist über eine neunte Gruppe 86 von Sensoren 52 erfaßbar, die im Einströmbereich der kalten Kühlluft L des Stators 8 angeordnet sind. Die Einflußgrößen 80, also die TeilStröme $I_U$, $I_V$, und $I_W$ des Stroms I und die Spannung U des Stators 8, der Erregerstrom $I_E$ und die Drehzahl N des Rotors 6 und der Temperaturwert $T_{LK}$ der dem Stator 8 zuströmenden kalten Kühlluft L sind über datentechnische Verbindungen 88 ebenfalls dem Aufbereitungsmodul 70 zuführbar.

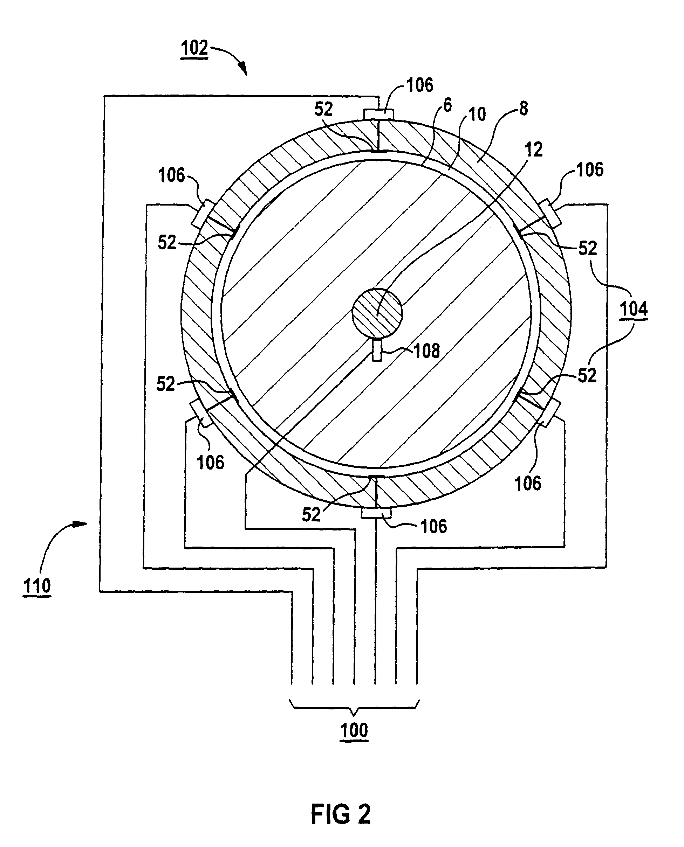

Zur Erfassung der aktuellen Meßdaten 100 des radialen Spalts 10 sind drei Meßebenen 102 vorgesehen, die jeweils senkrecht zur Drehachse bzw. zur Welle 12 des Rotors 6 stehen. Es kann aber auch in Abhängigkeit von der Auslegung der Anlage erforderlich sein, mehr oder weniger als drei Meßebenen vorzusehen Dabei sollten auch die weiteren Meßebenen parallel zur Welle 12 des Rotors 6 angeordnet sein. Die aktuellen Meßdaten 100 des radialen Spalts 10 werden mittels einer zehnten Gruppe 104 von Sensoren 52 erfaßt, von denen sechs in der in Figur 2 dargestellten und jeweils zwei in den weiteren, nicht dargestellten Meßebenen 102 angeordnet sind. Die Anordnung der sechs Sensoren 52 der zehnten Gruppe 104 der in der mittleren Ebene des Stators angeordneten Meßebene 102 ergibt sich gemäß FIG 2, die im Querschnitt den in FIG 1 mit X bezeichneten Ausschnitt zeigt. Die Sensoren 52 der anderen Meßebenen 102 sind in vergleichbarer Weise angeordnet, wobei die Anzahl der Sensoren jedoch nur zwei beträgt.

Gemäß FIG 2 sind zur Erfassung von Meßdaten 100 des radialen Spalts 10 sechs Sensoren 52 der zehnten Gruppe 104 am inneren Mantel des Blechpakets 16 in einer Ebene angeordnet, die parallel zur Welle 12 des Rotors 8 steht. Die Sensoren 52 sind jeweils an einen Meßwandler oder Conditioner 106 angeschlossen, die am äußeren Mantel des Blechpakets 16 angeordnet sind. Außerdem ist an der Welle 12 des Rotors 6 ein Keyphasor oder eine Phasenmarke 108 angeordnet. Mißt nun beim Betrieb des Generators 2 einer der sechs Sensoren 52 einen bestimmten Abstand zwischen einem Pol des Rotors 6 und dem Stator 8, so ist mittels des über die Phasenmarke 108 erfaßten Signals in elektronischer Weise der Pol identifizierbar, an dem die Messung erfolgt ist. Die Meßdaten 100 des radialen Spalts 10 des Generators 2 sind über eine datentechnische Verbindung 110 ebenfalls dem Aufbereitungsmodul 70 zuführbar, was in FIG 1 dargestellt ist.

Das Aufbereitungsmodul 70 ist für eine Berechnung von aktuellen Kenngrößen 120 aus den aktuellen Randgrößen 50, den aktuellen Einflußgrößen 80 und den aktuellen Meßdaten 100 vorgesehen. Hierzu weist das Aufbereitungsmodul 70 ein Rechnermodul 122 auf, dem die Randgrößen 50, die Einflußgrößen 80 und die Meßdaten 100 zuführbar sind. Im Aufbereitungsmodul 70 erfolgt außerdem eine Analog- / Digitalwandlung der erfaßten Daten sowie eine Grenzwertüberwachung oder Plausibilitätskontrolle. Auch dient das Aufbereitungsmodul 70 zum Aufbauen von Datentelegrammen sowie zur Signalbildung für Warnungen und Störungen.

Das Aufbereitungsmodul 70 ist über einen Datenbus 124 mit einem Analysemodul 126 verbunden. Das Aufbereitungsmodul 70 und das Analysemodul 126 gehören zur Vorrichtung 128, mit deren Hilfe der radiale Spalt 10 zwischen dem Rotor 6 und dem Stator 8 des elektrischen Generators 2 beim Betrieb des Generators 2 überwacht wird.

Das Analysemodul 126 umfaßt ein Speichermodul 130, ein Fingerprintmodul 132 und ein Überwachungsmodul 134. Das Speichermodul 130 umfaßt einen Langzeitspeicher, einen Monatsspeicher und einen Ereignisspeicher zur Speicherung von erfaßten Daten, ermittelten Kenngrößen 120 und durchgeführten Meßzyklen sowie deren Ergebnissen. Über das Fingerprintmodul 132 erfolgt die Steuerung von Basismessungen, mittels derer Referenzwerte des Generators 2 bei bestimmten Betriebszuständen ermittelt werden. Das Überwachungsmoduls 134 ist zur Steuerung von am Generator 2 durchführbaren Meßzyklen und deren Auswertung vorgesehen. Für diese Funktionen kommuniziert das Überwachungsmodul 134 mit dem Speichermodul 130, dem Fingerprintmodul 132 und über den Datenbus 124 mit dem Aufbereitungsmodul 70. Außerdem sind mittels des Analysemoduls 126 Protokolle und Graphiken der gemessenen Daten erstellbar. Weiterhin kann das Analysemodul 126 einem Bediener der Anlage einen Rechnerausfall und/oder eine Grenzwertüberschreitung einer oder mehrerer Kenngrößen 120 signalisieren.

Während des Betriebs des Generators 2 wird die Form des radialen Spalts 10 und der Abstand zwischen dem Rotor 6 und dem Stator 8 analysiert, wobei insbesondere der minimalste Abstand zwischen dem Rotor 6 und dem Stator 8 betrachtet wird. Hierzu wird in regelmäßigen Zeitabständen ein Meßzyklus durchgeführt, bei dem die Meßgrößen 100 des radialen Spalts 10 aktuell erfaßt und analysiert werden. Der jeweilige Meßzyklus dauert eine vorgegebene Zeit T und wird nach Ablauf der Zeit T sofort wiederholt, so daß sich ohne Unterbrechung ein Meßzyklus an den anderen reiht.

Der jeweilige Meßzyklus wird vom Überwachungsmodul 134 gesteuert und dauert in diesem Ausführungsbeispiel 30 Minuten. Zum Zeitpunkt t=$T_0$ werden die Einflußgrößen 80 eingelesen. Die Einflußgrößen 80 sind die drei Teilströme $I_U$, $I_V$, und $I_W$ der Wicklungen U, V und W des Stators 8, die Spannung U des Stators 8, der Erregerstrom $I_E$ und die Drehzahl N des Rotors 6 sowie der Temperaturwert $T_{LK}$ der dem Stator 8 zuströmenden kalten Kühlluft L. Die Einflußgrößen 80 gelangen über die datentechnischen Verbindungen 88 in das Aufbereitungsmodul 70. In dem Aufbereitungsmodul 70 erfolgt eine Aufbereitung der eingelesenen Einflußgrößen 80 in der Weise, daß sie dem Analysemodul 126 über den Datenbus 124 zugeführt werden können. Nach erfolgter Aufbereitung werden die aufbereiteten Einflußgrößen 80A dem Analysemodul 126 zugeführt. Im Analysemodul 126 erfolgt dann mit den im Analysemodul 126 angeordneten Modulen eine Prüfung des Betriebszustands des Generators 2 mittels der aufbereiteten Einflußgrößen 80A.

Bei der Prüfung des Betriebszustands des Generators 2 wird überprüft, ob sich der Generator 2 in einem ersten Zustand der thermischen Beharrung, in einem zweiten stationären aber nicht ausgeglichenen Zustand oder in einem dritten Zustand befindet. Ein stationärer ausgeglichener Betriebszustand des Generators 2 liegt dann vor, wenn sich die Einflußgrößen 80 während einer parametrierbaren Zeit, in diesem Ausführungsbeispiel standardmäßig 10 Minuten, ausreichend konstant sind. Ein dritter Zustand des Generators 2 ist ein möglicher Zustand des Generators 2, der ungleich dem ersten oder zweiten Zustand des Generators ist. Hierbei kann es sich insbesondere um eine sogenannte Lastrampe oder Laständerung des Generators 2 handeln, die noch nicht abgeschlossen ist. Ergibt die Prüfung, daß ein dritter Zustand des Generators 2 vorliegt, so wird der Meßzyklus abgebrochen, und nach 30 Minuten automatisch neu gestartet. Nur wenn der Generator sich in einem ersten Zustand der thermischen Beharrung oder in einem zweiten stationären aber nicht ausgeglichenen Zustand befindet wird der Meßzyklus zu einem Zeitpunkt t=$T_1$ fortgesetzt.

Für einen jeden Meßzyklus steuert das Überwachungsmodul 134 zu einem Zeitpunkt t = $T_1$ das Einlesen der Meßdaten 100 des radialen Spalts 10 und der Randgrößen 50. Die Meßdaten 100 sind hierbei die Signale der sechs Sensoren 52 der zehnten Gruppe 104, die in der mittleren Meßebene 102 angeordnet sind und das Signal der Phasenmarke 108. Die Signale der Sensoren 52 der zehnten Gruppe 104 der oberen und der unteren Meßebene 102 dienen nur Kontrollzwecken. Auch die Meßdaten 100 des radialen Spalts 10 werden im Aufbereitungsmodul 70 so aufbereitet, daß das Analysemodul 126 sie einlesen kann. Die aufbereiteten Meßdaten 100A werden dann dem Analysemodul 126 zugeführt. Ebenso werden die Randgrößen 50 eingelesen, dem Aufbereitungsmodul 70 zur Aufbereitung zugeführt und dann als aufbereitete Randgrößen 50A in das Analysemodul 126 eingespeist. Randgrößen 50 sind der Temperaturwert $T_{16}$ am Blechpaket 16 des Stators 8, der Temperaturwert $T_{18}$ an der Wicklung 18 des Stators 8, der Temperaturwert $T_{LW}$ der vom Stator 8 abströmenden erwärmten Kühlluft L des Stators 8, der Temperaturwert $T_{WK}$ des kalten Kühlwassers WK vor dessen Eintritt in die Wicklung 18 des Stators 8 und der Temperaturwert $T_{WW}$ des warmen Kühlwassers WW nach dessen Austritt aus der Wicklung 18 des Stators 8. Weitere Randgrößen 50 des Generators 2 sind der Temperaturwert $T_{14}$ der Wicklung 14 des Rotors 6, sowie die Wirkleistung P und die Blindleistung Q des Generators 2.

Im Analysemodul 126 findet mittels der aufbereiteten Meßdaten 100A, der aufbereiteten Randgrößen 50A und der aufbereiteten Einflußgrößen 80A im Überwachungsmodul 134 eine Prüfung statt, ob sich der Generator 2 weiterhin in einem ersten Zustand der thermischen Beharrung oder in einem zweiten stationären aber nicht ausgeglichenen Zustand befindet. Hierzu wird unter anderem überprüft, ob die aufbereiteten Meßdaten 100A in einem vorgegebenen Toleranzband liegen.

Liegt nach der Erfassung und Aufbereitung der Meßdaten 100 des radialen Spalts 10 ein erster Zustand der thermischen Beharrung oder ein zweiter stationärer aber nicht ausgeglichener Zustand des Generators 2 vor, so wird der Meßzyklus zu einem Zeitpunkt t=$T_2$ fortgesetzt. Befindet sich der Generator 2 nach dieser Prüfung in einem Zustand der thermischen Beharrung, so erfolgt eine Bewertung der erfaßten Daten, befindet sich der Generator 2 in einem stationären aber nicht ausgeglichenen Zustand, so erfolgt eine Ersatzbewertung, befindet sich der Generator 2 in einem anderen möglichen Zustand, so wird der Meßzyklus abgebrochen. Der Meßzyklus wird also zum Zeitpunkt t = $T_1$ oder t = $T_2$ abgebrochen, wenn sich der Generator 2 in einem dritten möglichen Zustand befindet.

Für die Bewertung oder die Ersatzbewertung der erfaßten Daten werden im Aufbereitungsmodul 70 aus den Randgrößen 50, den Einflußgrößen 80 und den Meßdaten 100 Kenngrößen 120 ermittelt. Die in dem jeweiligen Meßzyklus aktuell bestimmten Kenngrößen 120 werden für die Bewertung oder Ersatzbewertung mit Referenzwerten im Analysemodul 126 verglichen.

Die Referenzwerte werden bei der sogenannten Fingerprintaufnahme des Generators 2 ermittelt und werden nur dann aktualisiert, wenn durch Reparaturmaßnahmen Änderungen am Generator 2, also beispielsweise am Rotor 6, am Stator 8 oder am Kühlwasserkreislauf 34 erfolgt sind. Die Bestimmung und Speicherung der Referenzwerte erfolgt mittels des Fingerprintmoduls 132. Zur Bestimmung der Referenzwerte werden bei wohldefinierten Betriebszuständen des Generators 2 Meßfahrten durchgeführt. Wohldefinierte Betriebszustände des Generators 2 sind dabei beispielsweise Zustände der minimalen und maximalen Wirkleistung P des Generators 2 sowie zwei weiteren Leistungsstufen, die in gleichmäßigen Abständen zwischen der minimalen und der maximalen Wirkleistung P des Generators 2 liegen. Für einen kleinen Leistungsbereich können dabei auch drei Meßfahrten ausreichend sein. Für jede Meßfahrt müssen dabei vor dem Start die Einflußgrößen 80 innerhalb eines projektierbaren Toleranzbandes konstant sein. Zusätzlich müssen die Randgrößen, sofern sie nicht automatisch erfaßt werden, manuell dokumentiert werden. Dabei wird die Reihenfolge der Meßpunkte anlagenspezifisch festgelegt, beispielsweise werden Anforderungen des Lastverteilers und/oder das Anfahrprogramm der Anlage berücksichtigt.

Die Bewertung oder Ersatzbewertung der Form des radialen Spalts 10 sowie des Abstands zwischen dem Rotor 6 und dem Stator 8 erfolgt mittels eines Vergleichs der aktuellen Kenngrößen 120 mit den Referenzwerten. Mit dem Ergebnis des Vergleichs erfolgt eine Berechnung der Form des radialen Spalts 10 sowie des Abstands zwischen dem Rotor 6 und dem Stator 8. Hier werden die mittlere Größe G des radialen Spalts 10, die Verschiebung V des Stators 8 relativ zur Welle 12 des Rotors 6 und die Verformung O des Stators 8 ermittelt. Weiterhin wird bei der Bewertung oder Ersatzbewertung die Form des radialen Spalts 10 anhand der mittleren Größe des radialen Spalts 10, der Verschiebung V des Stators 8 relativ zur Welle 12 des Rotors 6 und die Verformung O des Stators 8 im Hinblick darauf analysiert, ob Veränderungen dieser Größen im Laufe der Zeit sich negativ auf den Betrieb des Generators auswirken können. Insbesondere wird der kleinste Abstand zwischen dem Rotor 6 und dem Stator 8 überprüft. Bei einem zu geringen Abstand zwischen dem Rotor 6 und dem Stator 8 besteht die Gefahr, daß der Rotor 6 den Stator 8 während des Betriebs des Generators 2 streift, was große Schäden am Generator 2 hervorrufen kann.

Liegen die Kenngrößen 120 innerhalb eines vorgegebenen Wertebereiches, so wird der Betrieb des Generators 2 unverändert fortgesetzt. Weicht hingegen mindestens eine der aktuell bestimmten Kenngrößen 120 von einem vorgegebenen Wertebereich ab, so wird das Ergebnis der Bewertung oder Ersatzbewertung über ein Signal dem Bediener des Generators 2 signalisiert, damit der Bediener auf die jeweilige Veränderung des Zustands des Generators 2 reagieren kann. Die Grenzwertüberschreitung bei einer Ersatzbewertung besitzt dabei einen geringeren Stellenwert als diejenige bei einer Bewertung, als einem ersten Zustand der thermischen Beharrung des Generators 2. Mittels der Ersatzbewertung sollen lediglich eventuelle Veränderungen des Zustands des Generators 2 frühzeitig erkannt werden.

Die aktuell erfaßten Randgrößen 50, die aktuell erfaßten Einflußgrößen 80, die aktuell erfaßten Meßdaten 100, die aktuelle ermittelten Kenngrößen 120 sowie die aktuelle mittlere Größe G des radialen Spalts 10, die aktuelle Verschiebung V des Stators 8 relativ zur Welle 12 des Rotors 6, die aktuelle Verformung O des Stators 8 und weitere ermittelte oder erfaßte Daten des Meßzyklus werden dem Speichermodul 130 zugeführt, wo diese Größen zu Dokumentationszwecken gespeichert werden. Dabei wird auch der Zeitpunkt erfaßt, an dem die Daten erfaßt oder bestimmt worden sind. Mittels des Speichermoduls 130 wird das Ergebnis der Bewertung oder Ersatzbewertung sowie der zeitliche Verlauf der Randgrößen 50, der Einflußgrößen 80, der Meßdaten 100 sowie der Kenngrößen 120 in Protokollform aufbereitet, so daß Trendanalysen und graphische Darstellungen der erfaßten und bewerteten Größen möglich sind.

Nach erfolgter Bewertung oder Ersatzbewertung der erfaßten und ermittelten Größen wird zu einem Zeitpunkt t=T der Meßzyklus abgebrochen und von neuem begonnen. Dies ist in diesem Ausführungsbeispiel nach 30 Minuten der Fall. Die regelmäßige Durchführung des Meßzyklus alle 30 Minuten während des Betriebs des Generators 2 gewährleistet besonders zuverlässig eine Analyse der Form des radialen Spalts 10 zwischen dem Rotor 6 und dem Stator 8 sowie des Abstands zwischen dem Rotor 6 und dem Stator 8, wobei insbesondere der minimalste Abstand zwischen dem Rotor 6 und dem Stator 8 überprüft wird.

Mit der Vorrichtung 128 zur Überwachung des radialen Spalts 10 zwischen dem Rotor 6 und dem Stator 8 des elektrischen Generators 2 sind also beim Betrieb des Generators 2 die Form des radialen Spalts 10 zwischen dem Rotor 6 und dem Stator 8 analysierbar und der kleinste Abstand zwischen dem Rotor 6 und dem Stator 8 überwachbar. Hierzu werden aus aktuellen Randgrößen 50 des Generators 2, aus aktuellen Einflußgrößen 80 des Generators 2 und aus aktuellen Meßdaten 100 des radialen Spalts 10 die mittlere Größe G des radialen Spalts 10, die aktuelle Verschiebung V des Stators 8 relativ zur Welle 12 des Rotors 6 und die aktuelle Verformung V des Stators 10 bestimmt, sofern ein erster Zustand der thermischen Beharrung oder ein zweiter stationärer aber nicht ausgeglichener Betriebszustand des Generators 2 vorliegt. Hierdurch können den Betrieb des Generators 2 behindernde Veränderungen des Generators 2 frühzeitig erkannt und behoben werden. Dadurch ist ein störungsfreier Betrieb des Generators 2 besonders zuverlässig gewährleistet.

**Patentansprüche**

**1.** Verfahren zur Überwachung des radialen Spalts (10) zwischen dem Rotor (6) und dem Stator (8) einer elektrischen Maschine,
**gekennzeichnet durch** folgende Schritte:

a) Bei verschiedenen definierten Betriebszuständen werden vorab jeweils den Betriebszustand bedingende Einflussgrößen (80) erfasst, Basismessungen vorgenommen und daraus Basis-Referenzkenngrößen für die im jeweiligen Betriebszustand gemessene intakte Luftspaltgeometrie gebildet;
b) während des späteren Betriebs wird die Größe des radialen Spalts (10) an mehreren, über den Umfang der Maschine verteilten Messstellen und mindestens eine aktuelle Einflussgröße (80) des aktuellen Betriebszustands erfasst;

c) aus den im Schritt b) erhaltenen Größen (100), (80) werden aktuelle Kenngrößen (120), und aus den im Schritt

a) erhaltenen Basis-Referenzkenngrößen werden aktuelle Referenzkenngrößen gebildet, die einem intakten Luftspalt bei den aktuellen Werten der Einflussgrößen (80) entsprechen;

d) mindestens die in Schritt c) gewonnenen aktuellen Kenngrößen (120) werden mit den entsprechenden aktuellen Referenz-Kenngrößen des radialen Spalts verglichen; und wenn mindestens eine der aktuellen Kenngrößen (120) von der Referenz-Kenngröße um mehr als einen festgelegten Betrag abweicht, wird eine Warnung gegeben.

2. Verfahren nach Anspruch 1,
   **dadurch gekennzeichnet, daß** die aktuellen Messdaten (100) bei einem stationären und ausgeglichenem Betriebszustand der elektrischen Maschine aufgenommen werden.

3. Verfahren nach Anspruch 1 oder 2,
   **dadurch gekennzeichnet, daß** die aktuellen Messdaten (100) und Einflussgrößen (80) zyklisch erfasst und sowohl die aktuellen Kenngrößen (120) als auch die entsprechenden aktuellen Referenz-Kenngrößen in jedem Messzyklus gebildet werden.

4. Verfahren nach einem der Ansprüche 1 bis 3,
   **dadurch gekennzeichnet, daß** als Einflussgröße (80) mindestens einer der folgenden Betriebsparameter der elektrischen Maschine erfasst wird:

   - die in den Wicklungen des Stators fließenden Ströme ($I_u$, $I_v$, $I_w$)
   - der in der Wicklung des Rotors fließende Strom ($I_E$)
   - die Temperatur ($T_{LK}$) der dem Stator zuströmenden kalten Kühlluft (L)

5. Verfahren nach einem der Ansprüche 1 bis 4,
   **dadurch gekennzeichnet, daß** eine mathematische Methode der Fourier-Analyse auf erste mathematische Vektoren angewendet wird, die jeweils für eine Messstelle die aktuellen Messwerte (100) des Luftspalts zwischen Stator und den während eines Umlaufs vorbeilaufenden Rotorpolen enthalten; daß mindestens einer der aufgrund der Fourier-Analyse errechneten Koeffizienten zur Bildung von mindestens einer weiteren aktuellen Kenngrößen herangezogen wird und daß entsprechende Basis-Referenzkenngrößen des radialen Spalts unter entsprechender Anwendung der Fourier-Analyse auf die Basismesswerte gewonnen werden.

6. Verfahren nach Anspruch 5,
   **dadurch gekennzeichnet, daß** der erste, dem Gleichanteil der Fourier-Analyse entsprechende Koeffizient, der zweite, der Grundschwingung entsprechende Koeffizient und der dritte, der ersten Oberschwingung entsprechende Koeffizient zur Bildung von weiteren aktuellen Kenngrößen verwendet werden, wobei der Mittelwert der jeweils zu einem Vektor errechneten ersten Koeffizienten die mittlere Größe des radialen Spalts (10), der Mittelwert der jeweils zweiten Koeffizienten die mittlere Verschiebung der Rotorachse relativ zur Achse des Stators ("Exzentrität des Rotors") und der Mittelwert der jeweils dritten Koeffizient die mittlere Verformung des Rotors ("Ovalität des Rotors") beschreibt.

7. Verfahren nach Anspruch 6,
   **dadurch gekennzeichnet, daß** aus den bereits bestimmten Kenngrößen eine Hilfs-Kenngröße abgeleitet wird, welche eine Abschätzung darüber erlaubt, ob die weiteren aktuellen Kenngrößen die Verformung des Rotors ausreichend genau beschreiben.

8. Verfahren nach Anspruch 7,
   **dadurch gekennzeichnet, daß** bei signifikanten Werten der Hilfs-Kenngröße aus mindestens einem weiteren mittels der Fourier-Analyse gewonnenen Koeffizienten mindestens eine Bedarfs-Kenngröße gebildet wird.

9. Verfahren nach einem der Ansprüche 5 bis 8, **gekennzeichnet durch** die Anwendung einer mathematischen Methode der Fourier-Analyse auf einen zweiten mathematischen Vektor mit jeweils einer Messstelle entsprechenden Vektorkomponenten, die jeweils den zu der Messstelle gehörigen Mittelwert der Größe des radialen Spalts (10) enthält, wobei aus mindestens den zweiten aufgrund der Fourier-Analyse errechneten Koeffizienten mindestens eine zusätzliche aktuelle Kenngröße gebildet wird und entsprechende aktuelle Referenz-Kenngrößen des radialen Spalts unter entsprechender Anwendung der Fourier-Analyse auf die gemittelten, zu jeweils einer Messstelle gehörigen, Basis-Referenzkenngrößen gewonnen werden.

10. Verfahren nach Anspruch 9,
**dadurch gekennzeichnet, daß** die zusätzlichen aktuellen Kenngrößen aus den aufgrund der Fourier-Analyse des zweiten Vektors berechneten zweiten und dritten Koeffizienten gebildet werden.

11. Verfahren nach einem der Ansprüche 1 bis 10,
**dadurch gekennzeichnet, daß** die aktuellen Messdaten (100) des radialen Spalts (10) in einer Messebene (102) aufgenommen werden, deren Flächennormale parallel zur Welle (12) des Rotors (6) orientiert ist.

12. Verfahren nach einem der Ansprüche 1 bis 11,
**dadurch gekennzeichnet, daß** neben den den aktuellen Betriebszustand der elektrischen Maschine beschreibenden Einflussgrößen (80) auch mindestens eine Randgröße (50) erfasst wird.

13. Verfahren nach Anspruch 12,
**dadurch gekennzeichnet, daß** als Randgröße (50) mindestens eine der folgenden Größen erfasst wird:

- die Temperatur ($T_{16}$) des Stator-Blechpakets
- die Temperatur ($T_{18}$) der Statorwicklung
- die Temperatur ($T_{LW}$) der vom Stator abströmenden, warmen Kühlluft
- die Temperatur ($T_{WK}$) des kalten Kühlwassers vor dem Eintritt in die Statorwicklung
- die Temperatur ($T_{WW}$) des warmen, aus der Wicklung des Stators austretenden Kühlwassers
- die Temperatur der Rotorwicklung
- die Blindleistung der elektrischen Maschine
- die Wirkleistung der elektrischen Maschine

14. Verfahren nach Anspruch 12 oder 13, **dadurch gekennzeichnet, daß** die Randgrößen (50) zur weitergehenden Analyse der aktuellen Kenngrößen (120) verwendet werden.

15. Verfahren nach einem der Ansprüche 1 bis 14,
**dadurch gekennzeichnet, daß** mindestens jede Messung von aktuellen Messdaten (100), Einflussgrößen (80) und Randgrößen (50) sowie alle zu einer Messung ermittelten Kenngrößen (120) dokumentiert werden.

16. Verfahren zur Überwachung des radialen Spalts (10) zwischen dem Rotor (6) und dem Stator (8) eines elektrischen Generators (2), bei dem bei einem stationären und ausgeglichenen Betriebszustand des Generators (2) in festen Zeitabständen ein Meßzyklus durchgeführt wird,
wobei bei dem Meßzyklus

- aktuelle Einflußgrößen (80) des Generators (2) erfaßt werden,
- aktuelle Meßdaten (100) des radialen Spalts (10) und aktuelle Randgrößen (50) des Generators (2) erfaßt werden,
- aus den aktuellen Randgrößen (50) des Generators (2), aus den aktuellen Einflußgrößen (80) des Generators (2) und aus den aktuellen Meßdaten (100) des radialen Spalts (10) aktuelle Kenngrößen (120) des radialen Spalts (10) ermittelt werden, und
- mittels eines Vergleichs der aktuellen Kenngrößen (120) des radialen Spalts (10) mit Referenzwerten aus einer Anzahl von Basismessungen eine Bestimmung und Bewertung der Form des radialen Spalts (10) und des Abstands zwischen dem Rotor (6) und dem Stator (8) erfolgt.

17. Verfahren nach Anspruch 16, bei dem die Verschiebung (V) des Stators (8) relativ zur Welle (12) des Rotors (6) ermittelt wird.

18. Verfahren nach Anspruch 16 oder 17, bei dem die Verformung (O) des Stators (8) ermittelt wird.

19. Verfahren nach einem der Ansprüche 16 bis 18, bei dem als Randgrößen (50) des Generators (2) Temperaturwerte ($T_{16}$, $T_{18}$, $T_{LW}$, $T_{WK}$, $T_{WW}$) an verschiedenen Orten des Stators (8), der Temperaturwert ($T_{14}$) der Wicklung (14)

des Rotors (6), die Wirkleistung (P) und die Blindleistung (Q) des Generators (2) ermittelt werden.

**20.** Verfahren nach Anspruch 19,
bei dem als Temperaturwerte ($T_{16}$, $T_{18}$, $T_{LW}$, $T_{WK}$, $T_{WW}$) an verschiedenen Orten des Stators (8) der Temperaturwert ($T_{16}$) am Blechpaket (16) des Stators (8), der Temperaturwert ($T_{18}$) an der Wicklung (18) des Stators (8), der Temperaturwert ($T_{LW}$) der vom Stator (8) abströmenden warmen Kühlluft (L), der Temperaturwert ($T_{WK}$) des kalten Kühlwassers (WK) vor dem Eintritt in die Wicklung (18) des Stators (8) und der Temperaturwert ($T_{WW}$) des warmen Kühlwassers (WK) nach dem Austritt aus der Wicklung (18) des Stators (8) ermittelt werden.

**21.** Verfahren nach einem der Ansprüche 16 bis 20, bei dem als aktuelle Einflußgrößen (80) des Generators (2) der Strom (I) und die Spannung (U) des Stators (8), der Erregerstrom ($I_E$) und die Drehzahl (N) des Rotors (6) und die Temperatur ($T_{LK}$) der dem Stator (8) zuströmenden kalten Kühlluft (L) erfasst werden.

**22.** Verfahren nach einem der Ansprüche 16 bis 21, bei dem die aktuellen Meßdaten (100) des radialen Spalts (10) in einer Meßebene (102) bestimmt werden, die senkrecht zur Welle (12) des Rotors (6) steht.

**23.** Verfahren nach einem der Ansprüche 16 bis 22, bei dem jeder Meßzyklus dokumentiert wird.

**24.** Vorrichtung (128) zur Überwachung des radialen Spalts (10) zwischen dem Rotor (6) und dem Stator (8) eines elektrischen Generators (2), bei der eine Anzahl von Sensoren (52) zur Erfassung von aktuellen Randgrößen (50) des Generators (2), aktuellen Einflußgrößen (80) des Generators (2) und aktuellen Meßdaten (100) des radialen Spalts (10) vorgesehen sind, bei der die Sensoren (52) datentechnisch mit einem zur Erstellung von aktuellen Kenngrößen (120) aus den aktuellen Randgrößen (50) des Generators (2), den aktuellen Einflußgrößen (80) des Generators (2) und den aktuellen Meßdaten (100) des radialen Spalts (10) vorgesehenen Aufbereitungsmodul (70) verbunden sind, wobei das Aufbereitungsmodul (70) datentechnisch an ein Analysemodul (126) angeschlossen ist, wobei über das Analysemodul (126) ein Meßzyklus zur Analyse der Form des radialen Spalts (10) und zur Überwachung des Abstands zwischen dem Rotor (6) und dem Stator (8) steuerbar ist.

**25.** Vorrichtung nach Anspruch 24, bei der das Analysemodul (126) ein Speichermodul (130) umfaßt.

**Claims**

**1.** Method for monitoring the radial gap (10) between the rotor (6) and the stator (8) of an electrical machine, **characterized by** the following steps:

a) influencing variables (80) which govern the operating state are in each case recorded, basic measurements are carried out, and basic reference characteristic variables for the intact air gap geometry measured in the respective operating state are formed in advance for various defined operating states;
b) during subsequent operation, the size of the radial gap (10) is recorded at a number of measurement points, which are distributed around the circumference of the machine, and at least one instantaneous influencing variable (80) of the instantaneous operating state is recorded;
c) the variables (100), (80) obtained in step b) are used to form instantaneous characteristic variables (120), and the basic reference characteristic variables obtained in step a) are used to form instantaneous reference characteristic variables, which correspond to an intact air gap for the instantaneous values of the influencing variables (80);
d) at least the instantaneous characteristic variables (120) obtained in step c) are compared with the corresponding instantaneous reference characteristic variables of the radial gap; and if at least one of the instantaneous characteristic variables (120) differs from the reference characteristic variable by more than a specified amount, a warning is produced.

**2.** Method according to Claim 1,
**characterized in that** the instantaneous measurement data (100) is recorded when the electrical machine is in a steady and equilibrium operating state.

**3.** Method according to Claim 1 or 2,
**characterized in that** the instantaneous measurement data (100) and influencing variables (80) are recorded cyclically, and both the instantaneous characteristic variables (120) and the corresponding instantaneous reference characteristic variables are formed in each measurement cycle.

**4.** Method according to one of Claims 1 to 3,
**characterized in that** at least one of the following operating parameters of the electrical machine is recorded as the influencing variable (80):

- the currents ($I_u$, $I_v$, $I_w$) flowing in the windings on the stator
- the current ($I_E$) flowing in the winding on the rotor
- the temperature ($T_{LK}$) of the cold cooling air (L) flowing to the stator.

**5.** Method according to one of Claims 1 to 4,
**characterized in that** a mathematical model for Fourier analysis is applied to first mathematical vectors which, for each measurement point, contain the instantaneous measurement values (100) of the air gap between the stator and the rotor poles moving past it during one revolution; **in that** at least one of the coefficients calculated on the basis of the Fourier analysis is used to form at least one further instantaneous characteristic variable and **in that** corresponding basic reference characteristic variables are obtained for the radial gap by corresponding application of Fourier analysis to the basic measurement values.

**6.** Method according to Claim 5,
**characterized in that** the first coefficient, which corresponds to the DC component of the Fourier analysis, the second coefficient, which corresponds to the fundamental frequency, and the third coefficient, which corresponds to the first harmonic, are used to form further instantaneous characteristic variables, with the mean value of the first coefficients which are calculated for each vector describing the mean size of the radial gap (10), the mean value of each of the second coefficients describing the mean shift of the rotor axis relative to the axis of the stator ("eccentricity of the rotor"), and the mean value of each of the third coefficients describing the mean deformation of the rotor ("ovality of the rotor").

**7.** Method according to Claim 6,
**characterized in that** the already determined characteristic variables are used to derive an auxiliary characteristic variable which makes it possible to estimate whether the further instantaneous characteristic variables describe the deformation of the rotor sufficiently accurately.

**8.** Method according to Claim 7,
**characterized in that**, if the values of the auxiliary characteristic variable are significant, at least one requirement characteristic variable is formed from at least one further coefficient obtained by means of the Fourier analysis.

**9.** Method according to one of Claims 5 to 8,
**characterized by** the application of a mathematical model for Fourier analysis to a second mathematical vector having vector components which each correspond to one measurement point and each of which contains the mean value of the size of the radial gap (10) associated with that measurement point, with at least one additional instantaneous characteristic variable being formed from at least the second coefficients calculated on the basis of the Fourier analysis and corresponding instantaneous reference characteristic variables of the radial gap being obtained by corresponding application of the Fourier analysis to the averaged basic reference characteristic variables associated with each measurement point.

**10.** Method according to Claim 9,
**characterized in that** the additional instantaneous characteristic variables are formed from the second and third coefficients calculated on the basis of the Fourier analysis of the second vector.

**11.** Method according to one of Claims 1 to 10,
**characterized in that** the instantaneous measurement data (100) for the radial gap (10) is recorded in a measurement plane (102) the normal to whose surface is oriented parallel to the shaft (12) of the rotor (6).

**12.** Method according to one of Claims 1 to 11,
**characterized in that** at least one critical variable (50) is also recorded in addition to the influencing variables (80) which describe the instantaneous operating state of the electrical machine.

**13.** Method according to Claim 12,

**characterized in that** at least one of the following variables is recorded as the critical variable (50):

- the temperature ($T_{16}$) of the laminated stator core
- the temperature ($T_{18}$) of the stator winding
- the temperature ($T_{LW}$) of the hot cooling air flowing away from the stator
- the temperature ($T_{WK}$) of the cold cooling water before it enters the stator winding
- the temperature ($T_{WW}$) of the warm cooling water emerging from the winding on the stator
- the temperature of the rotor winding
- the wattless component of the electrical machine
- the real power of the electrical machine

14. Method according to Claim 12 or 13,
    **characterized in that** the critical variables (50) are used for more detailed analysis of the instantaneous characteristic variables (120).

15. Method according to one of Claims 1 to 14,
    **characterized in that** at least each measurement of the instantaneous measurement data (100), of the influencing variables (80) and of the critical variables (50) as well as all the characteristic variables (120) determined for one measurement are documented.

16. Method for monitoring the radial gap (10) between the rotor (6) and the stator (8) of an electrical generator (2), in which a measurement cycle is carried out at fixed time intervals when the generator (2) is in a steady and equilibrium operating state, in which case, during the measurement cycle:

    - instantaneous influencing variables (80) of the generator (2) are recorded,
    - instantaneous measurement data (100) are recorded for the radial gap (10) and instantaneous critical variables (50) are recorded for the generator (2),
    - instantaneous characteristic variables (120) for the radial gap (10) are determined from the instantaneous critical variables (50) for the generator (2), from the instantaneous influencing variables (80) for the generator (2) and from the instantaneous measurement data (100) for the radial gap (10), and
    - the shape of the radial gap (10) and the distance between the rotor (6) and the stator (8) are determined and assessed by comparing the instantaneous characteristic variables (120) for the radial gap (10) with reference values from a number of basic measurements.

17. Method according to Claim 16,
    in which the shift (V) of the stator (8) relative to the shaft (12) of the rotor (6) is determined.

18. Method according to Claim 16 or 17,
    in which the deformation (O) of the stator (8) is determined.

19. Method according to one of Claims 16 to 18,
    in which temperature values ($T_{16}$, $T_{18}$, $T_{LW}$, $T_{WK}$, $T_{WW}$) at different locations on the stator (8), the temperature value ($T_{14}$) of the winding (14) on the rotor (6), the real power (P) and the wattless component (Q) of the generator (2) are determined as critical variables (50) for the generator (2).

20. Method according to Claim 19,
    in which the temperature value ($T_{16}$) on the laminated core (16) of the stator (8), the temperature value ($T_{18}$) on the winding (18) on the stator (8), the temperature value ($T_{LW}$) of the warm cooling air (L) flowing away from the stator (8), the temperature value ($T_{WK}$) of the cold cooling water (WK) before it enters the winding (18) on the stator (8), and the temperature value ($T_{WW}$) of the warm cooling water (WK) after it emerges from the winding (18) on the stator (8) are determined as temperature values ($T_{16}$, $T_{18}$, $T_{LW}$, $T_{WK}$, $T_{WW}$) at different locations on the stator (8).

21. Method according to one of Claims 16 to 20,
    in which the current (I) and the voltage (U) of the stator (8), the field current ($I_E$) and the rotation speed (N) of the rotor (6), and the temperature ($T_{LK}$) of the cold cooling air (L) flowing to the stator (8) are recorded as instantaneous influencing variables (80) for the generator (2).

22. Method according to one of Claims 16 to 21,

in which the instantaneous measurement data (100) for the radial gap (10) is determined in a measurement plane (102) which is at right angles to the shaft (12) of the rotor (6).

23. Method according to one of Claims 16 to 22,
in which each measurement cycle is documented.

24. Apparatus (128) for monitoring the radial gap (10) between the rotor (6) and the stator (8) of an electrical generator (2), in which a number of sensors (52) are provided in order to record instantaneous critical variables (50) for the generator (2), instantaneous influencing variables (80) for the generator (2), and instantaneous measurement data (100) for the radial gap (10), in which the sensors (52) are connected, for data transmission purposes, to a processing module (70) which is provided in order to produce instantaneous characteristic variables (120) from the instantaneous critical variables (50) for the generator (2), from the instantaneous influencing variables (80) for the generator (2) and from the instantaneous measurement data (100) for the radial gap (10), with the processing module (70) being connected, for data transmission purposes, to an analysis module (126), in which case the analysis module (126) can control a measurement cycle for analysis of the shape of the radial gap (10) and for monitoring the distance between the rotor (6) and the stator (8).

25. Apparatus according to Claim 24,
in which the analysis module (126) has a memory module (130).

**Revendications**

1. Procédé de surveillance de l'intervalle (10) radial entre le rotor (6) et le stator (8) d'une machine électrique,
**caractérisé par** des stades suivants :

a) pour divers états de fonctionnement définis, on relève à l'avance des paramètres déterminant respectivement l'état de fonctionnement, on effectue des mesures de base et on forme à partir de cela des grandeurs caractéristiques de référence de base pour la géométrie intacte de l'intervalle, mesurée dans l'état de fonctionnement respectif ;
b) pendant le fonctionnement ultérieur, on relève la valeur de l'intervalle (10) radial en plusieurs points de mesure répartis sur le pourtour de la machine et au moins un paramètre (80) instantané de l'état instantané de fonctionnement ;
c) à partir des paramètres (100), (80) obtenus au stade b) on forme des grandeurs (120) caractéristiques instantanées et à partir des grandeurs caractéristiques de référence de base obtenues au stade a) on forme des grandeurs caractéristiques de référence instantanées qui correspondent à un intervalle intact pour les valeurs instantanées des paramètres (80) ;
d) on compare au moins les paramètres (120) instantanés obtenus au stade c) aux grandeurs caractéristiques de référence instantanées correspondantes de l'intervalle radial ; et si au moins l'une des grandeurs caractéristiques (120) instantanées s'écarte de la grandeur caractéristique de référence de plus d'un montant fixé il y a un avertissement.

2. Procédé suivant la revendication 1,
**caractérisé en ce que** l'on enregistre les données (100) de mesure instantanées pour un état de fonctionnement stationnaire et compensé de la machine électrique.

3. Procédé suivant la revendication 1 ou 2,
**caractérisé en ce que** l'on relève les données (100) de mesure instantanées et les paramètres (80) de manière cyclique et l'on forme à la fois les grandeurs (120) caractéristiques instantanées et les grandeurs caractéristiques de référence instantanées correspondantes dans chaque cycle de mesure.

4. Procédé suivant l'une des revendications 1 à 3,
**caractérisé en ce que** l'on relève comme paramètre (80) au moins l'un des paramètres de fonctionnement suivants de la machine électrique :

- les courants ($I_u$, $I_v$, $I_w$) passant dans les enroulements du stator
- le courant ($I_E$) passant dans l'enroulement du rotor
- la température ($T_{LK}$) de l'air (L) de refroidissement froid affluant au stator.

**5.** Procédé suivant l'une des revendications 1 à 4,

**caractérisé en ce que** l'on utilise une première méthode d'analyse mathématique d'analyse de Fourier sur des premiers vecteurs mathématiques, qui contiennent respectivement pour un point de mesure les valeurs (100) de mesure instantanées de l'intervalle entre le stator et les pôles du rotor qui défilent pendant un tour ; **en ce que** l'on tire parti d'au moins l'un des coefficients calculés sur la base de l'analyse de Fourier pour la formation d'au moins une autre grandeur caractéristique instantanée et ce que l'on obtient des grandeurs caractéristiques de référence de base correspondantes de l'intervalle radial en utilisant de manière correspondante l'analyse de Fourier sur les valeurs de mesure de base.

**6.** Procédé suivant la revendication 5,

**caractérisé en ce que** l'on utilise le premier coefficient correspondant à la partie continue de l'analyse de Fourier et le deuxième coefficient correspondant à l'oscillation fondamentale et le troisième coefficient correspondant au premier harmonique pour former d'autres grandeurs caractéristiques instantanées, la valeur moyenne des premiers coefficients décrivant la grandeur moyenne de l'intervalle (10) radial, la valeur moyenne de respectivement les deuxièmes coefficients décrivant le décalage moyen de l'axe du rotor par rapport à l'axe du stator ("excentricité du rotor") et la valeur moyenne du respectivement troisième coefficient décrivant la déformation moyenne du rotor ("ovalité du rotor").

**7.** Procédé suivant la revendication 6,

**caractérisé en ce que** l'on déduit des grandeurs caractéristiques déjà déterminées une grandeur caractéristique auxiliaire qui permet d'évaluer si les autres grandeurs caractéristiques instantanées décrivent d'une manière suffisamment précise la déformation du rotor.

**8.** Procédé suivant la revendication 7,

**caractérisé en ce que** pour des valeurs significatives de la grandeur caractéristique auxiliaire on forme, à partir d'au moins un autre coefficient obtenu au moyen de l'analyse de Fourier, au moins une grandeur caractéristique de besoin.

**9.** Procédé suivant l'une des revendications 5 à 8,

**caractérisé par** l'utilisation d'une méthode mathématique de l'analyse de Fourier sur un deuxième vecteur mathématique ayant respectivement une composante vectorielle correspondant à un point de mesure qui contient respectivement la valeur moyenne appartenant au point de mesure de la valeur de l'intervalle (10) radial, dans lequel à partir d'au moins les deuxièmes coefficients calculés sur la base de l'analyse de Fourier, on forme au moins une grandeur caractéristique instantanée supplémentaire et on obtient des valeurs caractéristiques de référence instantanées correspondantes de l'intervalle radial en utilisant de manière correspondante l'analyse de Fourier sur les grandeurs caractéristiques de référence de base moyennées associées à respectivement un point de mesure.

**10.** Procédé suivant la revendication 9,

**caractérisé en ce que** l'on forme les grandeurs caractéristiques instantanées supplémentaires à partir des deuxième et troisième coefficients calculés sur la base de l'analyse de Fourier du deuxième vecteur.

**11.** Procédé suivant l'une des revendications 1 à 10,

**caractérisé en ce que** l'on enregistre les données (100) de mesure instantanées de l'intervalle (10) radial dans un plan (102) de mesure dont la normale est dirigée parallèlement à l'arbre (12) du rotor (6).

**12.** Procédé suivant l'une des revendications 1 à 11,

**caractérisé en ce que** l'on relève, outre l'état de fonctionnement instantané des paramètres (80) décrivant la machine électrique, également au moins une grandeur (50) à la limite.

**13.** Procédé suivant la revendication 12,

**caractérisé en ce que** l'on relève comme grandeur (50) à la limite au moins l'une des grandeurs suivantes ;

- la température ($T_{16}$) du paquet de tôles statoriques
- la température ($T_{18}$) de l'enroulement statorique
- la température ($T_{LW}$) de l'air de refroidissement chaud sortant du stator
- la température ($T_{Wk}$) de l'eau de refroidissement froide en amont de l'entrée dans l'enroulement statorique
- la température ($T_{WW}$) de l'eau de refroidissement chaude sortant de l'enroulement du stator

- la température de l'enroulement rotorique
- la puissance réactive de la machine électrique
- la puissance réelle de la machine électrique.

**14.** Procédé suivant la revendication 12 ou 13,
**caractérisé en ce que** l'on utilise les grandeurs (50) aux limites pour analyser plus à fond les grandeurs (120) caractéristiques instantanées.

**15.** Procédé suivant l'une des revendications 1 à 14,
**caractérisé en ce que** l'on archive au moins chaque mesure de données (100) de mesure instantanées, paramètres (80) et grandeurs (50) aux limites ainsi que toutes les grandeurs (120) caractéristiques déterminées pour une mesure.

**16.** Procédé de surveillance de l'intervalle (10) radial entre le rotor (6) et le stator (8) d'une génératrice (2) électrique, dans lequel on effectue, pour un état de fonctionnement stationnaire et compensé de la génératrice (2) à des intervalles de temps fixes, un cycle de mesure, dans lequel dans le cycle de mesure

- on relève des paramètres (80) instantanés de la génératrice (2),
- on relève des données (100) de mesure instantanées de l'intervalle (10) radial et des grandeurs (50) aux limites instantanées de la génératrice (2),
- à partir des grandeurs (50) aux limites instantanées de la génératrice (2), des paramètres (80) instantanés de la génératrice (2) et des données (100) de mesure instantanées de l'intervalle (10) radial, on détermine des grandeurs (10) caractéristiques instantanées de l'intervalle (10) radial et
- au moyen d'une comparaison des grandeurs (120) caractéristiques instantanées de l'intervalle (10) radial à des valeurs de référence choisies parmi un certain nombre de mesures de base, on effectue une détermination et une évaluation de la forme de l'intervalle (10) radial et de la distance entre le rotor (6) et le stator (8).

**17.** Procédé suivant la revendication 16,
dans lequel on détermine le décalage (V) du stator (8) par rapport à l'arbre (12) du rotor (6).

**18.** Procédé suivant la revendication 16 ou 17,
dans lequel on détermine la déformation (O) du stator (8).

**19.** Procédé suivant l'une des revendications 16 à 18,
dans lequel on détermine comme grandeur (50) aux limites de la génératrice (2) des valeurs ($T_{16}$, $T_{18}$, $T_{LW}$, $T_{WK}$, $T_{WW}$) de température en différents points du stator (8), la valeur ($T_{14}$) de la température de l'enroulement (14) du rotor (6), la puissance (P) réelle et la puissance (Q) réactive de la génératrice (2).

**20.** Procédé suivant la revendication 19,
dans lequel on détermine comme valeur ($T_{16}$, $T_{18}$, $T_{LW}$, $T_{WK}$, $T_{WW}$) de température en différents points du stator (8) la valeur ($T_{16}$) de température sur le paquet (16) de tôles du stator (8), la valeur ($T_{18}$) de la température sur l'enroulement (18) du stator (8), la valeur ($T_{LW}$) de la température de l'air (L) de refroidissement chaud sortant du stator (8), la valeur ($T_{WK}$) de la température de l'eau (WK) de refroidissement froide en amont de l'entrée dans l'enroulement (18) du stator (8) et la valeur ($T_{WW}$) de la température de l'eau (WK) de refroidissement chaude après la sortie de l'enroulement (18) du stator (8).

**21.** Procédé suivant l'une des revendications 16 à 20,
dans lequel on relève comme paramètres (80) instantanés de la génératrice (2) le courant (I) et la tension (U) du stator (8), le courant ($I_E$) d'excitation et la vitesse de rotation (N) du rotor (6) et la température ($T_{LK}$) de l'air (L) de refroidissement froid affluant au stator (8).

**22.** Procédé suivant l'une des revendications 16 à 21,
dans lequel on détermine les données (100) de mesure instantanées de l'intervalle (10) radial dans un plan (102) de mesure qui est perpendiculaire à l'arbre (12) du rotor (6).

**23.** Procédé suivant l'une des revendications 16 à 22,
dans lequel on archive chaque cycle de mesure.

**24.** Dispositif (128) de surveillance de l'intervalle (10) radial entre le rotor (6) et le stator (8) d'une génératrice (2) électrique, dans lequel il est prévu un certain nombre de capteurs (52) destinés à relever des grandeurs (50) aux limites instantanées de génératrice (2), des paramètres (80) instantanés de la génératrice (2) et des données (100) de mesure instantanées de l'intervalle (10) radial, dans lequel les capteurs (52) sont reliés du point de vue informatique à un module (70) de traitement prévu pour l'établissement de grandeurs (120) caractéristiques instantanées à partir des grandeurs (50) aux limites instantanées de la génératrice (2), des paramètres (80) instantanés de la génératrice (2) et des données (100) de mesure instantanées de l'intervalle (10) radial, le module (70) de traitement étant raccordé du point de vue informatique à un module (126) d'analyse, un cycle de mesure, pour l'analysa de la forme de l'intervalle (10) radial et pour la surveillance de la distance entre le rotor (6) et le stator (8), pouvant être commandé par le module (126) d'analyse.

**25.** Dispositif suivant la revendication 24,
dans lequel le module (126) d'analyse comprend un module (130) de mémoire.

FIG 1

2

4

6

7

8

10

12

14

16

18

20

22

24

26

28

30

32

34

36

38

50

54

56

58

60

61

62

64

66

70

80

82

84

86

88

100

102

104

120

124

126

128

130

132

134

50A

80A

100A

LW

LK

$T_{WK}$

$T_{WW}$

$T_{LW}$

$T_{LK}$

$T_{14}$

$T_{16}$

$T_{18}$

$I_E$

N

U

$I_U$

$I_V$

$I_W$

P

Q

EP 1 240 703 B1

**FIG 2**